# DEMANDE DE BREVET EUROPEEN

(11) **EP 2 241 231 A1**
(43) Date de publication de la demande: **20.10.2010**
(21) Numéro de dépôt: 10159092.5
(22) Date de dépôt: 06.04.2010
(51) Int. Cl.: A47J 37/06

(54) **Dispositif électroménager avec couvercle de rangement**

(30) Priorité: 16.04.2009 FR 0952501
(71) Demandeur: SEB SA, 69130 Ecully (FR)
(72) Inventeur: Moine, Olivier, 73100, GRESY SUR AIX (FR)
(74) Mandataire: Novagraaf Technologies

(57) **Abrégé**

L'invention concerne un dispositif électroménager (1) modulable entre une configuration d'utilisation et une configuration de rangement, le dispositif (1) comprenant, d'une part, un appareil de cuisson (2) qui comporte une embase (3) formant sa partie inférieure quand le dispositif électroménager (1) est dans sa configuration d'utilisation, et, d'autre part, un couvercle (6) qui, quand le dispositif (1) est dans sa configuration de rangement, est adapté à recouvrir au moins la partie de l'appareil de cuisson (2) complémentaire à l'embase (3).

Selon l'invention, quand le couvercle (6) recouvre l'appareil de cuisson (2), il est fixé à ce dernier par des moyens de verrouillage libérables (9, 10) sans outil, et, quand le couvercle (6) est en position retournée, il est adapté à servir de socle sur lequel repose l'appareil de cuisson (2) quand le dispositif (1) est dans sa configuration d'utilisation.

## Description

La présente invention concerne un dispositif électroménager modulable entre une configuration d'utilisation et une configuration de rangement.

On connait un tel dispositif du type comprenant, d'une part, un appareil de cuisson qui comporte une embase formant sa partie inférieure quand le dispositif électroménager est dans sa configuration d'utilisation, et, d'autre part, un couvercle qui, quand le dispositif est dans sa configuration de rangement, est adapté à recouvrir au moins la partie de l'appareil de cuisson complémentaire à l'embase.

La présente invention vise à réaliser un dispositif ayant des fonctionnalités supplémentaires.

Selon l'invention, dans le dispositif électroménager du type précité, le couvercle, en position retournée, est adapté à servir de socle sur lequel repose l'appareil de cuisson quand le dispositif est dans sa configuration d'utilisation.

Ainsi, selon l'invention, le dispositif comprend un couvercle qui est conformé de façon à pouvoir recouvrir la majorité (voire la totalité) de l'appareil de cuisson, en ne laissant apparent que sa partie inférieure. De ce fait, l'ensemble technique de l'appareil de cuisson est protégé par le couvercle quand le dispositif est dans sa configuration de rangement. De plus, la caractéristique selon laquelle le couvercle sert de socle à l'appareil de cuisson, permet de ne pas séparer ces deux éléments (et donc d'avoir toujours le couvercle à portée de main lors du rangement de l'appareil de cuisson) et de surélever l'appareil de cuisson (de la hauteur du couvercle) - et donc de pouvoir réduire la transmission thermique vers les différents ustensiles ménagers disposés à proximité du dispositif et de faciliter l'accès à ce dernier.

D'autres particularités et avantages de la présente invention apparaîtront dans le mode de réalisation donné à titre d'exemple non limitatif et illustré par les dessins mis en annexe dans lesquels :
La figure 1 est une vue en perspective d'un dispositif électroménager conforme à la présente invention, dans sa configuration de rangement,
La figure 2 est une vue similaire à la figure 1, le dispositif étant dans sa configuration d'utilisation,

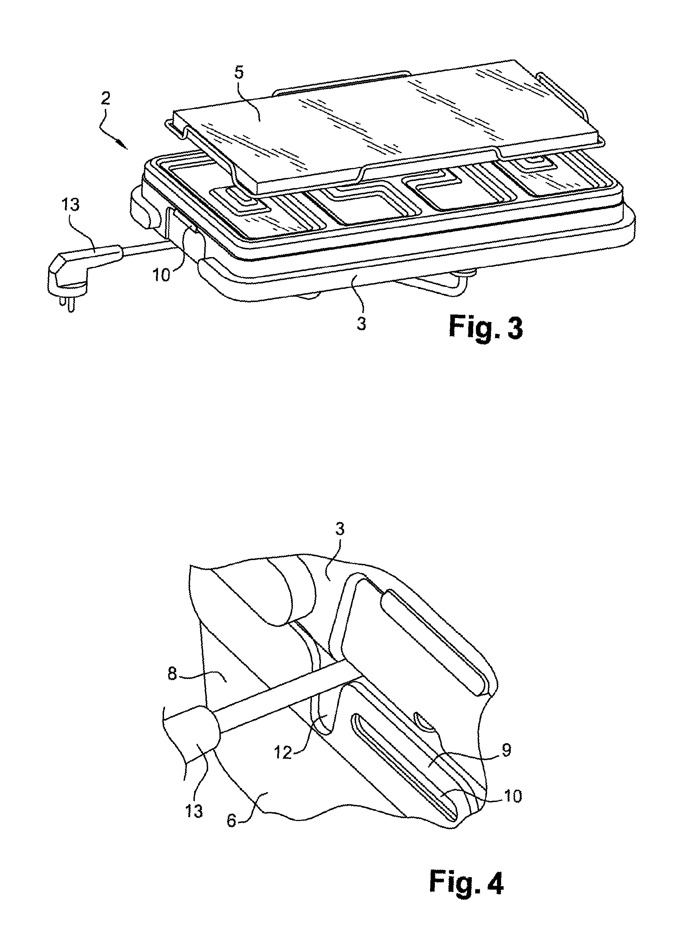

La figure 3 est une vue de l'appareil de cuisson, sans le couvercle, auquel un câble d'alimentation électrique est connecté, et
La figure 4 est une vue similaire à la figure 2, illustrant le passage du câble d'alimentation électrique.

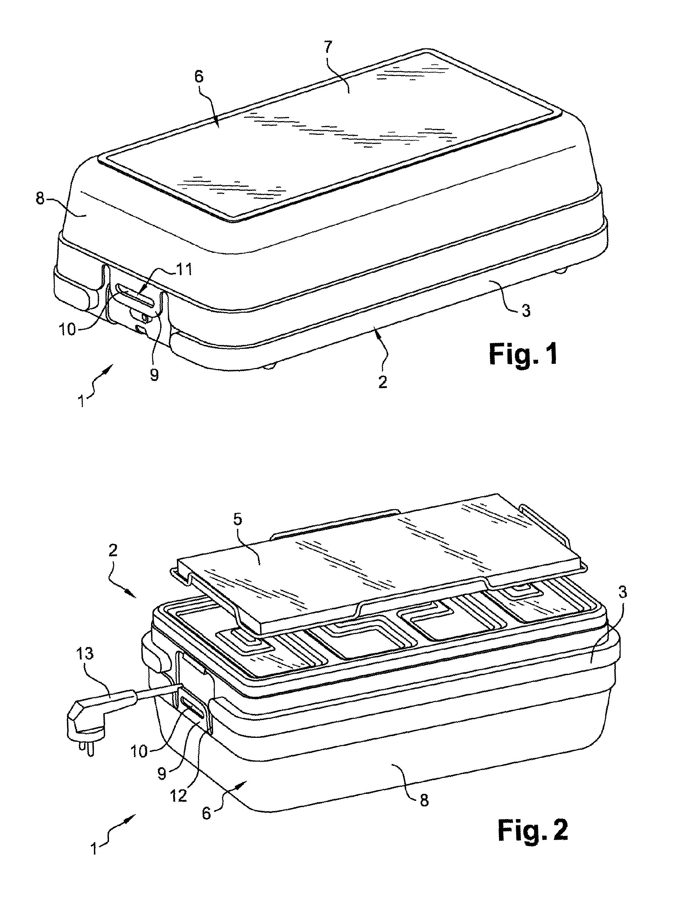

Les figures 1 et 2 illustrent un dispositif électroménager 1 qui est modulable entre une configuration d'utilisation et une configuration de rangement. Le dispositif 1 comprend un appareil de cuisson 2, en l'occurrence, un appareil à raclette 2. L'appareil de cuisson 2 comporte une embase 3 qui, quand le dispositif électroménager 1 est dans sa configuration d'utilisation, la partie inférieure de l'appareil de cuisson 2. Ici, l'appareil de cuisson 2 étant un appareil à raclette 2, l'embase 3 est formée par la sole 3 sur laquelle reposent des coupelles pendant l'opération de cuisson. L'appareil à raclette 2 comprend classiquement, outre la sole 3 et les coupelles de réception de fromage, une résistance électrique portée par la sole 3 et sous laquelle sont disposées les coupelles pendant l'opération de cuisson, et un capot 5 (ici, amovible) recouvrant la résistance électrique de façon à protéger chaque utilisateur de tout contact avec celle-ci. Ce capot 5 fait également office de réflecteur thermique et de plaque ce cuisson pour certains aliments.

Le dispositif électroménager 1 comprend également un couvercle 6. Quand le dispositif 1 est dans sa configuration de rangement, le couvercle 6 recouvre au moins la partie de l'appareil de cuisson 2 qui est complémentaire à l'embase 3. En l'occurrence, le couvercle 6 recouvre le capot 5 ainsi que la chambre de cuisson (dans laquelle sont disposées le coupelles pendant l'opération de cuisson) qui s'étend de la sole 3 au capot 5. De ce fait, le capot permet de protéger la quasi-totalité de l'appareil de cuisson 2.

Quand le dispositif électroménager 1 est dans sa configuration de rangement, le couvercle 6 est adapté à emprisonner les ustensiles liés à l'appareil de cuisson 2 dans l'espace intérieur qui est délimité par le couvercle 6 et l'appareil de cuisson 2. En l'occurrence le couvercle 6 permet également de protéger les coupelles quand elles sont disposées dans la chambre de cuisson.

Dans le présent exemple, le couvercle 6 est formé par un caisson sans fond qui comporte une surface supérieure 7 pleine, et une surface latérale 8 pleine qui prend de la surface supérieure 7. De façon plus précise, l'appareil de cuisson 2 ayant une embase 3 de forme rectangulaire, la surface supérieure 7 est également de forme rectangulaire, et la surface latérale 8 comprend quatre pans, chaque pan pendant d'un côté de la surface supérieure 7.

De plus, quand le dispositif 1 est dans sa configuration de rangement, le couvercle 6 est fixé à l'appareil de cuisson par des moyens de verrouillage libérables 9, 10 (ici, le couvercle 6 est fixé à l'embase 3). Dans le présent exemple, les moyens de verrouillage libérables 9, 10 sont formés par des moyens permettant un verrouillage par encliquetage. De façon plus précise, ces moyens de verrouillage 9, 10 sont formés, d'une part, par des pattes 9 qui sont élastiquement déformables (et qui sont ici portées par le couvercle 6), et, d'autre part, par des ergots complémentaires 10 (qui sont ici portés par l'appareil de cuisson 2). De façon à réaliser le verrouillage, chaque patte 9 comprend un orifice 11 qui est adapté à recevoir l'ergot complémentaire 10 correspondant.

Ainsi, le couvercle 6 permet de pouvoir ranger facilement l'appareil de cuisson 2 et de le protéger de la poussière, sans craindre de perdre un quelconque accessoire. La protection contre la poussière est d'autant plus fiable que la section droite de l'ouverture inférieure du couvercle formée par l'extrémité libre de la paroi latérale 8 est ajustée à la section droite de l'embase 3.

Par ailleurs, le couvercle 6, en position retournée, est adapté à servir de socle sur lequel repose l'appareil de cuisson 2 quand le dispositif 1 est dans sa configuration d'utilisation. Cette caractéristique permet de ne pas séparer le couvercle 6 de l'appareil de cuisson 2 (et donc d'avoir toujours le couvercle à portée de main lors du rangement de l'appareil de cuisson 2). Cette caractéristique permet également de surélever l'appareil de cuisson 2 (cette surélévation est sensiblement égale à la hauteur du couvercle 6). En conséquence, quand l'appareil de cuisson 2 est un appareil de cuisson conviviale à poser au centre de la table d'un repas, d'une part, les différents ustensiles disposés à proximité (tels que les verres) sont moins chauffés par l'appareil de cuisson, et, d'autre part, la chambre de cuisson (ou la surface de cuisson) est plus facile d'accès du fait qu'elle est surélevée par rapport à ces ustensiles (plus particulièrement, par rapport aux verres).

En outre, dans le présent exemple, afin d'obliger l'utilisation du couvercle 6 comme socle, la fiche par laquelle le câble d'alimentation électrique 13 est connectée à l'appareil de cuisson 2 est située à la face inférieure de l'embase 3 (la face faisant face au support sur lequel repose le dispositif 1 en configuration d'utilisation). De ce fait, en l'absence du couvercle, le câble d'alimentation 13 forme une proéminence ponctuelle entraînant une inclinaison de l'appareil de cuisson empêchant de fait son utilisation correcte. Afin de permettre le passage du câble d'alimentation 13 au travers du socle, le dispositif comprend une ouverture latérale 12 au niveau de la jonction entre le couvercle 6 et l'embase 3. En l'occurrence, l'ouverture latérale 12 est réalisée à l'extrémité libre de la paroi latérale 8 du couvercle 6.

De plus, le dispositif électroménager 1 comprend des moyens de verrouillage libérables secondaires permettant de fixer l'appareil de cuisson 2 au couvercle 3 en position retournée sur lequel l'appareil de cuisson 2 repose. Dans le présent exemple, ces moyens de verrouillage libérables secondaires sont formés par les moyens de verrouillage libérables qui permettent la fixation du couvercle 6 à l'appareil de cuisson 2 quand le dispositif 1 est dans sa configuration de rangement.

Ainsi, comme illustré aux figures 1 et 2, la section droite de l'ouverture du couvercle 6 est ajustée à la section droite de l'embase 3, que le couvercle 6 soit en position de couvercle comme en position de socle (ce qui permet alors d'avoir une immobilisation de l'appareil 2 sur le socle formé par le couvercle 6, et donc un dispositif électroménager 1 stable en configuration d'utilisation).

La présente invention n'est pas limitée au présent mode de réalisation. Il serait ainsi possible que l'appareil de cuisson ne soit pas un appareil à raclette. Il serait également possible que les moyens de verrouillage soient différents, notamment qu'ils soient formés par un filetage dans le cas où l'embase est de forme circulaire. Il serait tout aussi possible que le couvercle présente des ouvertures (notamment à sa paroi latérale) - sans que, de préférence, ces ouvertures puissent laisser s'échapper des accessoires.

## Revendications

1. Dispositif électroménager (1) modulable entre une configuration d'utilisation et une configuration de rangement, le dispositif (1) comprenant, d'une part, un appareil de cuisson (2) qui comporte une embase (3) formant sa partie inférieure quand le dispositif électroménager (1) est dans sa configuration d'utilisation, et, d'autre part, un couvercle (6) qui, quand le dispositif (1) est dans sa configuration de rangement, est adapté à recouvrir au moins la partie de l'appareil de cuisson (2) complémentaire à l'embase (3) et à emprisonner dans l'espace intérieur délimité par le couvercle (6) et l'appareil de cuisson (2) des accessoires (4) liés à l'appareil de cuisson (2), **caractérisé en ce que** le couvercle (6), en position retournée, est adapté à servir de socle sur lequel repose l'appareil de cuisson (2) quand le dispositif (1) est dans sa configuration d'utilisation.

2. Dispositif électroménager (1) selon la revendication 1, **caractérisé en ce qu'**il comprend des moyens de verrouillage (9, 10) qui sont libérables sans outil et qui permettent de fixer l'appareil de cuisson (2) au couvercle (6) en position retournée.

3. Dispositif électroménager (1) selon la revendication 2, **caractérisé en ce que** les moyens de verrouillage libérables (9, 10) sont formés par des moyens permettant un verrouillage par encliquetage.

4. Dispositif électroménager (1) selon la revendication 3, **caractérisé en ce que** les moyens de verrouillage par encliquetage (9, 10) sont formés par des pattes (9) élastiquement déformables portées par le couvercle (6) et des ergots complémentaires (10) portés par l'appareil de cuisson (2).

5. Dispositif électroménager (1) selon la revendication 4, **caractérisé en ce que** chaque patte (9) élastiquement déformable comprend un orifice de verrouillage (11) adapté à recevoir l'ergot complémentaire (10) correspondant.

6. Dispositif électroménager (1) selon l'une des revendications 1 à 5, **caractérisé en ce qu'**il comprend des seconds moyens de verrouillage (9, 10) qui sont libérables sans outil et qui permettent de fixer le couvercle (6) recouvrant l'appareil de cuisson (2) quand le dispositif (1) est dans sa configuration de rangement.

7. Dispositif électroménager (1) selon la revendication 6, **caractérisé en ce que** les seconds moyens de verrouillage sont formés par les moyens de verrouillage.

8. Dispositif électroménager (1) selon la revendication 6 ou 7, **caractérisé en ce que**, quand il est dans sa configuration de rangement, le couvercle (6) est fixé à l'embase (3) par les seconds moyens de verrouillage (9, 10).

9. Dispositif électroménager (1) selon l'une des revendications 1 à 8, **caractérisé en ce qu'**il comprend un câble d'alimentation électrique (13) adapté à venir se connecter dans une fiche située à la face inférieure de l'embase (3).

10. Dispositif électroménager (1) selon l'une des revendications 1 à 9, **caractérisé en ce que** le couvercle (6) est formé par un caisson sans fond comportant une surface supérieure (7) de laquelle pend une surface latérale (8) continue.

11. Dispositif électroménager (1) selon la revendication 10, **caractérisé en ce que** la surface latérale (8) comprend quatre pans, chaque pan pendant d'un côté de la surface supérieure (7) rectangulaire.

12. Dispositif électroménager (1) selon l'une des revendications 1 à 11, **caractérisé en ce que** l'appareil de cuisson (2) est un appareil à raclette dont la sole sur laquelle reposent des coupelles (4) pendant l'opération de cuisson, forme l'embase (3).
